# EUROPEAN PATENT SPECIFICATION

(11) **EP 2 992 370 B1**
(45) Date of publication and mention of the grant of the patent: **13.12.2017**
(21) Application number: 14727669.5
(22) Date of filing: 24.04.2014
(51) Int. Cl.: G02B 6/38, G02B 6/245

(54) **THERMAL REMOVAL OF OPTICAL FIBER COATINGS BY INSERTION THROUGH HEATED FERRULES TO FORM FERRULE ASSEMBLIES FOR FIBER OPTIC CONNECTORS, AND RELATED ASSEMBLIES**
THERMISCHE ENTFERNUNG VON GLASFASERBESCHICHTUNGEN DURCH EINFÜHRUNG ERHITZTER HÜLSEN ZUR FORMUNG VON HÜLSENANORDNUNGEN FÜR GLASFASERVERBINDER UND ANORDNUNGEN DARAUS
ÉLIMINATION THERMIQUE DE REVÊTEMENTS DE FIBRES OPTIQUES PAR INSERTION DANS DES FERRULES CHAUFFÉES POUR FORMER DES ENSEMBLES FERRULES POUR CONNECTEURS DE FIBRES OPTIQUES ET ENSEMBLES S'Y RAPPORTANT

(30) Priority: 30.04.2013 US 201313873824; 21.04.2014 US 201461981959 P
(43) Date of publication of application: 09.03.2016
(73) Proprietor: Corning Optical Communications LLC, Hickory, NC 28601 (US)
(72) Inventor: MILLER, Darrin Max, Hickory, North Carolina 28601 (US); MORRISON, Dennis Craig, Lincolnton, North Carolina 28092 (US); YEAKEL, Kipp David, Waverly, New York 14892 (US)
(74) Representative: Sturm, Christoph
(86) International application number: PCT/US2014/035290
(87) International publication number: WO 2014/179146

(56) References cited:
- JP-A- S5 450 343
- JP-A- 2010 266 822
- JP-A- 2013 015 790

## Description

### BACKGROUND

The disclosure relates generally to fiber optic connectors, and more particularly to removing polymer coatings overlaying optical fibers, which may be used when preparing the optical fibers for attachment in ferrules of the fiber optic connectors.

Benefits of optical fibers include extremely wide bandwidth and low noise operation. In cases where high bandwidth is required between two interconnection locations, fiber optic cables having fiber optic connectors may be used to communicate information between these locations. The fiber optic connectors may be used to conveniently connect and disconnect the fiber optic cables from the interconnection locations, for example, to facilitate maintenance and upgrades.

Fiber optic connectors include a ferrule assembly having a ferrule. The ferrule has several purposes. The ferrule includes an internal pathway, called a ferrule bore, through which an optical fiber is supported and protected. The ferrule bore also includes an opening at an end face of the ferrule. The opening is where an optical core of an end portion of the optical fiber may be located to be aligned to an end portion of another optical fiber of a complementary connector. The optical core may be as small as eight (8) microns, such that the end portions of the optical fibers need to be precisely aligned to establish an optical connection.

The optical fibers typically include a glass fiber (e.g., cladding and optical core) surrounded by a protective polymer coating, which is removed from an end portion of an optical fiber prior to being disposed within the ferrule bore of the ferrule. This is because the polymer coatings do not currently have the robust mechanical properties necessary to be attached to the ferrule bore to withstand the cyclical tension experienced during the use of the fiber optic optic connector over time without displacement creep or breakage. Also, the glass fiber of the optical fiber is not centered within the polymer coating with sufficient accuracy to permit the glass fiber to be precisely located within the ferrule bore without removing the coating. For at least these reasons, the coating is removed from the end portion of the optical fiber prior to being disposed in a ferrule.

Various methods are available to remove the coating from an optical fiber, including hot gas stripping, mechanical stripping, chemical stripping, and laser stripping. All of these methods have drawbacks. Hot-gas stripping uses a heated jet of gas (e.g., nitrogen or air) to melt and remove the coating, but considerable debris is often created. The hot-gas stripping approach may also incompletely evaporate the coating, and/or may overheat heat-sensitive materials in close proximity to the fiber core.

Mechanical stripping of optical fibers includes physically removing the coating material from the glass fiber with a semi-sharp edge of a stripping blade made of a metal or a polymer, as may be similar to mechanical stripping of electrical wires. However, mechanical stripping may have issues because the optical fiber may be damaged, and stripping blades are needed that require time-consuming inspection and replacement procedures. Chemical stripping of optical fibers uses chemicals to dissolve the coating from the glass portion of the optical fiber, but these chemicals require extensive procedures to protect the environment and safety measures to protect personnel.

Laser stripping utilizes one or more laser beams to strip the coating from glass optical fibers typically using a vaporization or ablation process as laser energy is absorbed by the polymer coatings. In order to remove the coatings around a circumference of the optical fiber the laser energy must be distributed around the circumference which typically requires added complexity and cost. For example, complex three-dimensional mirrors may be utilized, or the optical fiber may be moved relative to a laser beam using specialized equipment.

In addition, once coating is removed from an end portion of an optical fiber using any of the above-mentioned methods, the optical fiber is vulnerable to damage. A stripped portion of an optical fiber may be damaged merely by being in contact with particulates which could scratch or damage an exterior surface of the optical fiber where coating has been removed. Any coating stripping process completed prior to insertion of the optical fiber into a ferrule must be managed carefully so that the stripped portion of the optical fiber is not damaged prior to being protected within the ferrule.

What is desired is a more cost-effective and efficient method to prepare an end portion of an optical fiber for terminating into a ferrule so that the end portion is coupled to the ferrule and the coating of the end portion of the optical fiber is removed or substantially removed. The method and associated equipment should remove the coating from the end portion of the optical fiber while minimizing damage to the optical fiber. The method should also be efficient, inexpensive, and not require unsafe chemicals.

JP 2013 015790 A discloses a ferrule assembly according to the prior art. Other prior art is discloses by JP S54 50343 A and by JP 2010 266822 A.

### SUMMARY

Embodiments disclosed herein include thermal removal of optical fiber coatings by insertion through heated ferrules to form ferrule assemblies for fiber optic connectors, and related assemblies. An optical fiber includes a glass fiber, having a cladding and core, surrounded by a protective coating. By removing the coating at an end portion of the optical fiber, the end portion may be precisely positioned and secured within a ferrule to enable reliable optical communications. The coating may be thermally removed, or substantially thermally removed, by inserting the optical fiber through a rear opening of the ferrule which has been heated above a temperature sufficient to cause the coating to at least partially separate or other otherwise become free from the optical fiber. In this manner, the coating may be efficiently removed from the end portion of the optical fiber while being inserted into the ferrule bore of the ferrule to enable efficient forming of a ferrule assembly for a fiber optic connector.

In this regard, the invention provides a method of terminating an optical fiber at a ferrule to create a ferrule assembly for a fiber optic connector. The method comprises providing a ferrule at an initial temperature, the ferrule comprising a ferrule bore extending from a rear opening to a front opening. The method also comprises heating the ferrule above the initial temperature with a heating device. The method also comprises inserting a coated end portion of an optical fiber through the rear opening of the ferrule bore while the ferrule is heated above the initial temperature to thermally remove or substantially thermally remove the coating from the coated end portion of the optical fiber passing through the rear opening of the ferrule. In this manner, manufacturing time is reduced as conventional coating removal processes, such as mechanical stripping with stripping blades, are no longer required. In some embodiments, the ferrule may be heated above the initial temperature sufficient to change the coating on the coated end portion of the optical fiber to a non-solid state for thermally removing or substantially thermally removing the coating.

Another example of a method of terminating an optical fiber involves providing a ferrule having a front end, a rear end, a ferrule bore extending between the front and rear ends, and a bonding agent disposed in at least a portion of the ferrule bore. The method also involves applying energy to heat the bonding agent. An end section of an optical fiber is inserted into the ferrule bore and through the bonding agent when the bonding agent is heated. The end section of the optical fiber includes a primary coating prior to insertion into the ferrule bore. During insertion of the end section of the optical fiber through the bonding agent, the heated bonding agent thermally removes at least a portion of the primary coating during. Finally, the method involves securing the optical fiber in the ferrule bore with the bonding agent.

Additional features and advantages will be set forth in the detailed description which follows, and in part will be readily apparent to those skilled in the art from the description or recognized by practicing the embodiments as described in the written description and claims hereof, as well as the appended drawings.

It is to be understood that both the foregoing general description and the following detailed description are merely exemplary, and are intended to provide an overview or framework to understand the nature and character of the claims.

The accompanying drawings are included to provide a further understanding, and are incorporated in and constitute a part of this specification. The drawings illustrate one or more embodiment(s), and together with the description serve to explain principles and operation of the various embodiments.

### BRIEF DESCRIPTION OF THE DRAWINGS

**FIG. 1A** is a side perspective view of a coated end portion of an optical fiber adjacent to a rear opening of a ferrule bore of a heated ferrule to illustrate the optical fiber before insertion into the ferrule to terminate the optical fiber in the ferrule;
**FIG. 1B** is a side perspective view of the coated end portion of the optical fiber of **FIG. 1A** being inserted into the ferrule bore through the rear opening of the heated ferrule, illustrating the coating of the end portion of the optical fiber being thermally removed or substantially thermally removed as the optical fiber passes through the rear opening of the heated ferrule;
**FIG. 2** is a flowchart diagram of an exemplary process of terminating an optical fiber at a ferrule to create a ferrule assembly for a fiber optic connector by inserting the coated end portion of the optical fiber into the ferrule bore through the rear opening of the heated ferrule to remove the coating at the end portion of the optical fiber;
**FIG. 3A** is a cutaway view along an optical axis **A₁** of the ferrule of **FIG. 1A** provided at an initial temperature with epoxy being optionally inserted into a ferrule bore of the ferrule, according to the exemplary process of **FIG. 2****;**
**FIG. 3B** is a cutaway view along the optical axis **A₁** of the ferrule of **FIG. 3A** being heated above the initial temperature, according to the exemplary process of **FIG. 2****;**
**FIG. 3C** is a cutaway view along the optical axis **A₁** of the ferrule of **FIG. 3B** that has been heated above the initial temperature adjacent to the optical fiber of **FIG. 1A****,** illustrating a force being applied to the end portion of the optical fiber to insert the end portion into the rear opening of the ferrule, according to the exemplary process of **FIG. 2****;**
**FIG. 3D** is a cutaway view and a close-up view along the optical axis **A₁** of a ferrule assembly formed from the ferrule of **FIG. 3C****,** with the end portion of the optical fiber of **FIG. 3C** inserted through the ferrule, according to the exemplary process of **FIG. 2****,** and illustrating the coating thermally removed or substantially thermally removed from the end portion;
**FIG. 4A** is a cutaway view and a cutaway close-up view along the optical axis **A₁** of the ferrule assembly of **FIG. 3D** including the ferrule coupled to the optical fiber as part of an exemplary fiber optic connector sub-assembly, illustrating a coated portion of the optical fiber disposed outside the ferrule and the end portion disposed within the ferrule and extending from the rear opening of the ferrule with the coating removed or substantially removed, consistent with the process of **FIG. 2****;**
**FIG. 4B** is a cutaway view orthogonal to the optical axis **A₁** of the coated portion of the optical fiber of **FIG. 4A** showing a glass portion surrounded by a coating comprising at least one layer of the coating;
**FIG. 4C** is a cutaway view parallel to the optical axis **A₁** of the ferrule assembly of **FIG. 4A** showing the end portion of the optical fiber disposed within the ferrule with the coating thermally removed or substantially thermally removed, consistent with the process of **FIG. 2****;**
**FIG. 5A** is a flowchart diagram of another exemplary process of terminating an optical fiber at a ferrule to create a ferrule assembly for a fiber optic connector by inserting the coated end portion of the optical fiber into the ferrule bore through the rear opening of the heated ferrule to remove the coating at the end portion of the optical fiber;
**FIG. 5B** is a side view of the ferrule of **FIG. 1A** surrounded by an electromagnet illustrating heating the ferrule above the initial temperature via induction heating, consistent with the process of **FIG. 5A****;**
**FIG. 6A** is a flowchart diagram of another exemplary process of terminating an optical fiber at a ferrule to create a ferrule assembly for a fiber optic connector; and
**FIG. 6B** is a side view of the ferrule of **FIG. 1A** with a laser beam incident thereon illustrating heating the ferrule to the elevated temperature via laser energy, consistent with the process of **FIG. 6A****.**

### DETAILED DESCRIPTION

Reference will now be made in detail to the embodiments, examples of which are illustrated in the accompanying drawings, in which some, but not all embodiments are shown. Indeed, the concepts may be embodied in many different forms and should not be construed as limiting herein; rather, these embodiments are provided so that this disclosure will satisfy applicable legal requirements. Whenever possible, like reference numbers will be used to refer to like components or parts.

Embodiments disclosed herein include thermal removal of optical fiber coatings by insertion through heated ferrules to form ferrule assemblies for fiber optic connectors, and related assemblies. An optical fiber includes a glass fiber, having a cladding and core, surrounded by a protective coating. By removing the coating at an end portion of the optical fiber, the end portion may be precisely positioned and secured within a ferrule to enable reliable optical communications. The coating may be thermally removed, or substantially thermally removed, by inserting the optical fiber through a rear opening of the ferrule which has been heated above a temperature sufficient to change the coating to a non-solid state. In this manner, the coating may be efficiently removed from the end portion of the optical fiber while being inserted into the ferrule bore of the ferrule to enable efficient forming of a ferrule assembly for a fiber optic connector.

With regard to securing an end portion of an optical fiber within a ferrule, it has been discovered that coating may be thermally removed from the end portion as it is inserted through a rear opening of a ferrule heated above a temperature sufficient to change the coating to a non-solid state. Coatings are removed because the glass portion of the optical fiber must be located with sufficient accuracy in order to establish optical communications when a part of a fiber optic connector. The coating surrounding the glass portion of the optical fiber often does not have sufficient concentricity with respect to the glass portion of the optical fiber to accurately determine the location of the optical core. The coatings also are typically not strong enough to secure the end portion of the optical fiber without axial movement along the optical axis of the ferrule as the optical fiber is subject to axial forces during connections and disconnections with other optical fibers as part of a fiber optic connector. Accordingly, by thermally removing the coating from the end portion, the optical fiber may be securely and precisely located to the ferrule by forming a direct abutment between the glass portion of the optical fiber and an inner surface of the ferrule. In this manner, conventional processes to remove the coating from the end portion of the optical fiber prior to being inserted into the ferrule may be eliminated to save time and reduce redundancy.

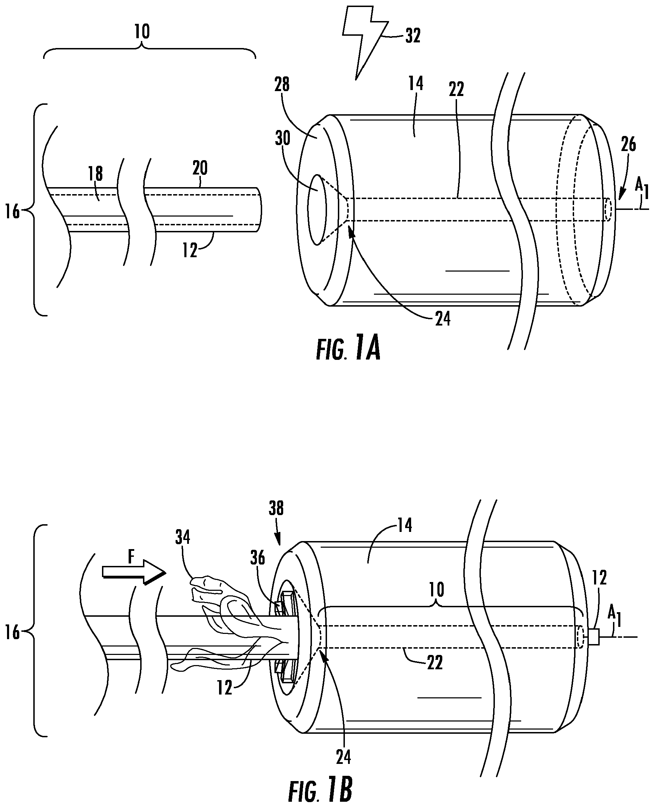

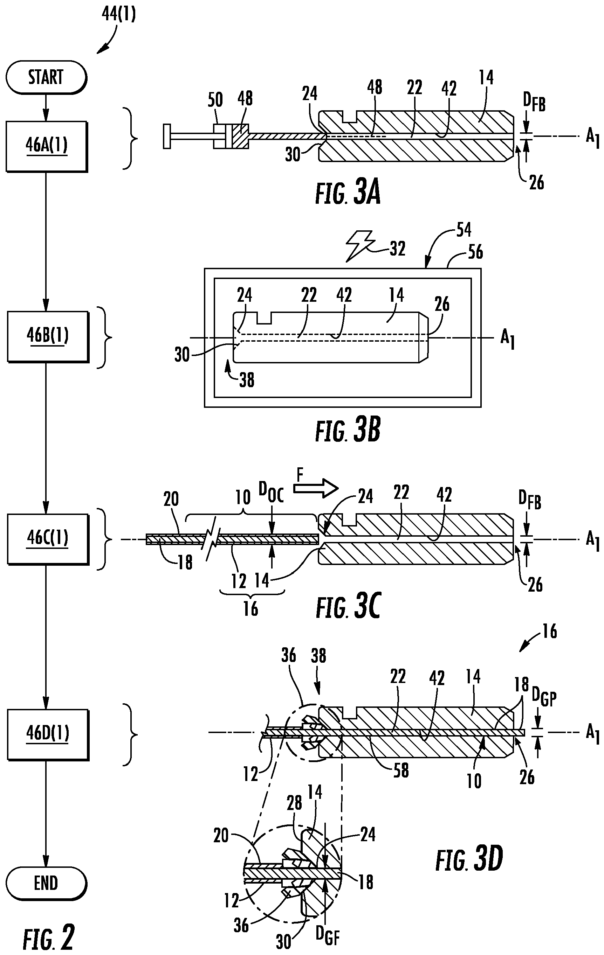

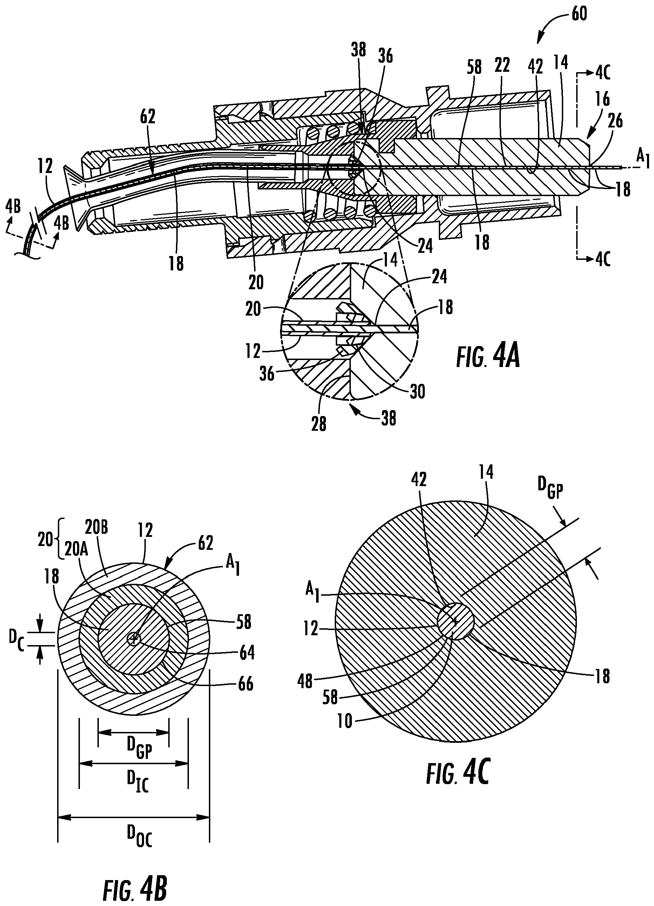

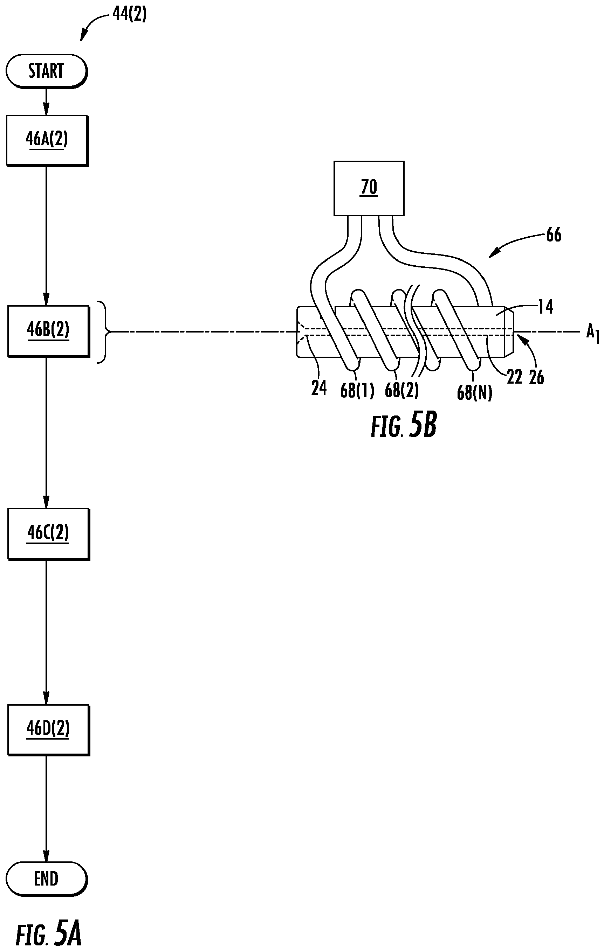

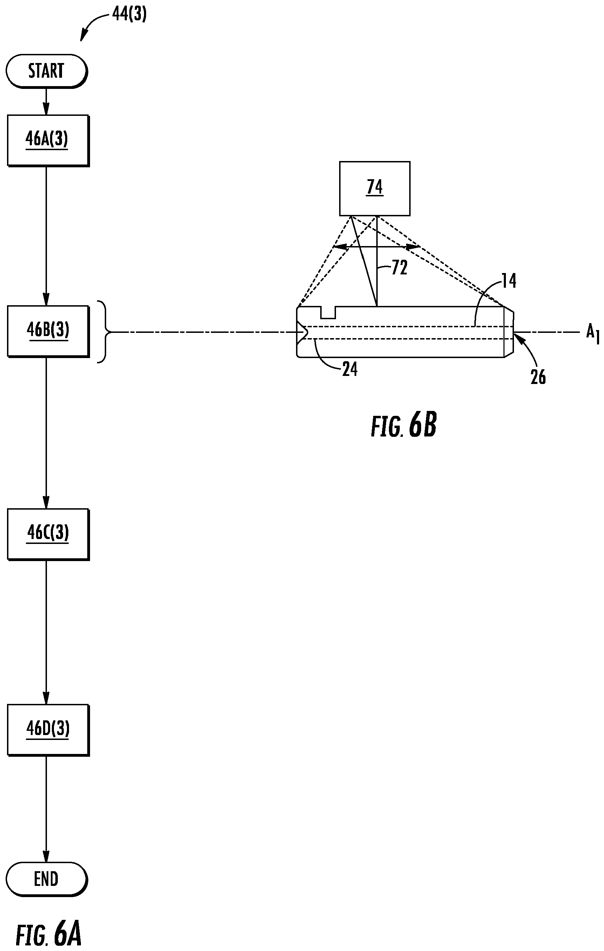

In this regard, this disclosure is organized in sections. First, **FIGS. 1A** and **1B** will be utilized to introduce the concept of inserting an optical fiber into a heated ferrule to thermally remove coating from the end portion of the optical fiber. Next, a flowchart in **FIG. 2** is discussed as part of an exemplary process of terminating an optical fiber at a ferrule to create a ferrule assembly for a fiber optic connector in relation to related process details depicted in **FIGS. 3A** through **3D****.** Then, **FIGS. 4A** through **4C** are introduced to show a fiber optic connector sub-assembly utilizing a ferrule assembly consistent with the exemplary process of **FIG. 2****.** Next, **FIGS. 5A** and **5B** will be discussed to describe another embodiment of the process of **FIG. 2** wherein induction heating is utilized to heat the ferrule. Finally, **FIGS. 6A** and **6B** will be discussed to describe yet another embodiment of the process of **FIG. 2****,** wherein laser energy is utilized to heat the ferrule.

In this regard, **FIG. 1A** is a side perspective view of a coated end portion **10** ("end section") of an optical fiber **12** adjacent to a rear opening **24** of a ferrule **14** to which it will be terminated to create a ferrule assembly **16.** The end portion **10** of the optical fiber **12** includes a glass portion **18** (sometimes simply referred to as the "optical fiber") surrounded by a coating **20** (also referred to as a "primary coating"). The glass portion **18** may comprise silica to provide efficient transmission of light through the optical fiber **12,** but is vulnerable damage. The coating **20** protects the optical fiber **12** outside of the ferrule **14.** The ferrule **14** includes a ferrule bore **22** extending from the rear opening **24** to a front opening **26** of the ferrule **14,** which is configured to hold the end portion **10** of the optical fiber **12** with the coating **20** removed. Specifically, the ferrule bore **22** may be used to precisely position and securely hold the glass portion **18** of the optical fiber **12** within a fiber optic connector (shown later in **FIG. 4A**) so that optical communications may be established. The ferrule **14** may include at least one rear surface **28** to form a cone-shaped volume **30** to guide the end portion **10** of the optical fiber **12** into the ferrule bore **22.**

It is also noted that the ferrule **14** of **FIG. 1A** has been heated by energy **32** to a temperature sufficient to change the coating **20** of the end portion **10** of the optical fiber **12** to a non-solid state. The energy **32** may heat the ferrule **14** while minimizing damage to the ferrule **14** and the optical fiber **12.** For example, the energy **32** may be transferred using conduction heat transfer, radiant heat transfer, and/or convection heat transfer. In one embodiment, the ferrule **14** may be heated by induction.

**FIG. 1B** is a side perspective view of the coated end portion **10** of the optical fiber **12** of **FIG. 1A** after being inserted through the rear opening **24** of the ferrule **14** with a force **F.** The coating **20** of the end portion **10** of the optical fiber **12** is shown as being thermally removed or substantially thermally removed as the end portion **10** of the optical fiber **12** passes through the rear opening **24** of the ferrule **14,** which has been heated. As used herein, the phrase "thermally removes" or "thermally removed" refers to heat from the ferrule **14** (and/or a bonding agent disposed in the ferrule **14;** discussed below) causing the coating **20** to at least partially separate or otherwise become free from the optical fiber **12,** possibly (but not necessarily) with the coating **20** being changed to a non-solid state. In the embodiment shown in **FIG. 1B****,** the coating **20** removed from the end portion **10** may be partially converted to a gas **34,** oxidized, and/or partially melted to form a support body **36.** The support body **36** may provide protection from harmful bending as the optical fiber **12** extends from the rear end **38** of the ferrule **14.**

The end portion **10** of the optical fiber **12** with the coating **20** thermally removed, or substantially thermally removed, is disposed within the ferrule **14** and extends from the rear opening **24** through the ferrule bore **22** of the ferrule **14.** The end portion **10** may also extend through the front opening **26** of the ferrule **14.** The end portion **10** of the optical fiber **12** extending from the front opening **26** may be, for example, mechanically polished (not shown) to be flush with the front end **40** of the ferrule **14.** The end portion **10,** with the coating **20** removed or substantially removed, is securely attached to the inner surface **42** of the ferrule **14** without interference of the coating **20,** which would otherwise not permit the optical fiber **12** to be secured to the ferrule **14** with the strength needed to withstand cyclical stresses experienced by a fiber optic connector. Also, with the coating **20** removed, the glass portion **18** of the end portion **10** of the optical fiber **12** may be more precisely located relative to the ferrule **14** because the glass portion **18** of the end portion **10** of the optical fiber **12** may not be centered within the coating **20** with sufficient accuracy. In this manner, the optical fiber **12** may be secured and precisely located to the ferrule **14** to form a ferrule assembly **16,** thereby enabling reliable optical communications when assembled as part of a fiber optic connector (**FIG. 4A**).

Now that the optical fiber **12** and the ferrule **14** have been introduced, as well as the concept of thermally removing coating **20** from the end portion **10** of the optical fiber **12,** an exemplary process **44(1)** to provide the ferrule assembly **16** for a fiber optic connector is discussed. In this regard, **FIG. 2** is a flowchart diagram of the exemplary process **44(1)** of providing the ferrule assembly **16** for the fiber optic connector. The process **44(1)** in **FIG. 2** will be described using terminology and information provided above. **FIGS. 3A-3D** correspond with blocks **46A(1), 46B(1),** 46C(1), and **46D(1),** respectively, in **FIG. 2****,** and will be discussed together.

**FIG. 3A** is a cutaway view along an optical axis **A₁** of the ferrule **14** of **FIG. 1A****,** illustrating providing the ferrule **14** comprising the ferrule bore **22** extending from the rear opening **24** to the front opening **26** at an initial temperature (block **46A(1)** in **FIG. 2**). The ferrule **14** may comprise zirconia for strength. The initial temperature may be ambient temperature, for example, twenty (20) degrees Celsius. The ferrule bore **22** may be formed by an inner surface **42** of the ferrule **14** extending from the rear opening **24** to the front opening **26.** The ferrule bore **22** may have a diameter **D_{FB}** (or width) corresponding to approximately a diameter **D_{GP}** (or width) of the glass portion **18** of the optical fiber **12.** In one embodiment, the diameter **D_{FB}** of the ferrule bore **22** may be within ten (10) nanometers of the diameter **D_{GP}** of the glass portion **18** of the optical fiber **12.** In this manner, the glass portion **18** of the end portion **10** may be better secured to the inner surface **42** of the ferrule **14** when the coating **20** is thermally removed, or substantially thermally removed, from the glass portion **18** at the end portion **10** of the optical fiber **12.**

It is noted that the ferrule **14** may be provided with a bonding agent **48** optionally inserted into the ferrule bore **22.** In one embodiment shown in **FIG. 3A****,** the bonding agent **48** may be inserted into the ferrule bore **22** with a syringe **50.** The bonding agent **48** may be inserted through the rear opening **24** and/or the front opening **26** to be disposed in at least a portion of the ferrule bore **22.** The bonding agent **48** may be, for example, an epoxy **52.** In this manner, the end portion **10** of the optical fiber **12** may be better secured within the ferrule **14** and thereby more resistant to movement which may cause attenuation.

As depicted in **FIG. 3B****,** the process **44(1)** may comprise heating the ferrule **14** above the initial temperature with a heater device **54** (block **46B(1)** in **FIG. 2**). The heater device **54** may be in one embodiment an oven **56,** which may heat the ferrule **14** with the energy **32.** The ferrule **14** may be heated above an elevated temperature sufficient to change the coating **20** on the coated end portion **10** of the optical fiber **12** to a non-solid state. For example, the elevated temperature may be three-hundred (300) degrees Celsius, and the coating **20** may comprise acrylate. The elevated temperature may thereby thermally remove, or substantially thermally remove, the coating **20** from the coated end portion **10** of the optical fiber **12** passing through the rear opening **24** of the ferrule **14.** In this manner, the energy **32** to thermally remove the coating **20** is transferred to the ferrule **14** to be made available to thermally remove the coating **20** of the optical fiber **12.**

**FIG. 3C** is a cutaway view along the optical axis **A₁** of the ferrule **14** of **FIG. 3B****,** illustrating a force **F** being applied to the coated end portion **10** of the optical fiber **12** to thereby insert the end portion **10** into the rear opening **24** of the ferrule **14** (block **46C(1)** in **FIG. 2**). The force F maybe, for example, less than two (2) pounds (0.91 kg) and applied manually or by an automated actuator (not shown). The diameter **D_{OC}** (or width) of the coated end portion **10** of the optical fiber **12** may be greater than the diameter **D_{FB}** of the ferrule bore **22.** In this manner, the coating **20** of the end portion **10** may be pushed away from the end portion **10** as the coating **20** is thermally removed, or substantially thermally removed, from the end portion **10** of the optical fiber **12.**

**FIG. 3D** depicts a cutaway view and a close-up view along the optical axis **A₁** of the ferrule assembly **16,** formed from the ferrule **14** of **FIG. 3C** with the end portion **10** of the optical fiber **12** of **FIG. 3C** disposed through the ferrule **14** (block **46D(1)** in **FIG. 2**). Specifically, the coating **20** has been thermally removed, or substantially thermally removed, from the end portion **10** of the optical fiber **12.** As used herein, substantially thermally removed means that at least twenty-five (25) percent of an exterior surface **58** of the glass portion **18** of the end portion **10** of the optical fiber **12** within the ferrule bore **22** is free of coating **20.** It is also believed that having more than fifty (50) percent, and more than seventy-five (75) percent of the exterior surface **58** of the glass portion **18** of the end portion **10** of the optical fiber **12** to be free of coating **20** is also possible. In this manner, the glass portion **18** of the end portion **10** of the optical fiber **12** within the ferrule bore **22** may be secured to the ferrule **14,** for example, with the bonding agent **48,** to minimize attenuation caused by movement of the optical fiber **12** within the ferrule **14.**

As the coating **20** is removed from the end portion **10** of the optical fiber **12,** the support body **36** may be formed outside and adjacent to the rear opening **24** of the ferrule **14.** The support body **36** may comprise coating **20** which may be partially converted to a gas **34,** oxidized, and/or partially melted. The support body **36** may at least partially occupy the cone-shaped volume **30** formed by the at least one rear surface **28.** In this manner, the support body **36** may protect the optical fiber **12** from harmful bending as the optical fiber **12** extends from the rear end **38** of the ferrule **14.**

It is noted that, unless expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that any particular order be inferred.

Now that the optical fiber **12,** the ferrule **14,** and the process **44(1)** to terminate the optical fiber **12** at the ferrule **14** to create the ferrule assembly **16** for a fiber optic connector have been introduced above, a fiber optic connector sub-assembly **60,** including the ferrule assembly **16** created by the exemplary process **44(1),** is now discussed. In this regard, **FIG. 4A** is a cutaway view along the optical axis **A₁** of the ferrule assembly **16** of **FIG. 3D****.** The ferrule assembly **16** comprises the ferrule **14** coupled to the optical fiber **12** as part of the exemplary fiber optic connector sub-assembly **60.**

Consistent with the discussion above for **FIGS. 1A-3D****,** the ferrule assembly **16** of the fiber optic connector sub-assembly **60** comprises the ferrule **14** comprising the ferrule bore **22** extending from the rear opening **24** to the front opening **26.** The ferrule assembly **16** also comprises the support body **36** disposed outside and adjacent to the rear opening **24.** The ferrule assembly **16** also comprises the glass portion **18** of the optical fiber **12** secured to the ferrule **14.** The optical fiber **12** may be secured to the ferrule **14** with the bonding agent **48.** The optical fiber **12,** comprising a coated portion **62** of the optical fiber **12,** is disposed outside the rear opening **24** of the ferrule **14.** The optical fiber **12** also comprises the end portion **10** of the optical fiber **12** disposed within the ferrule **14** and extending within the ferrule bore **22** from the rear opening **24** of the ferrule **14** to the front opening **26** of the ferrule **14.** At least twenty-five (25) percent of the exterior surface **58** of the glass portion **18** of the end portion **10** of the optical fiber **12** within the ferrule bore **22** is free of the coating **20.**

Features of the optical fiber **12** make thermal removal efficient. In this regard, **FIG. 4B** is a cutaway view orthogonal to the optical axis **A₁** of the coated portion **62** of the optical fiber **12** of **FIG. 4A****,** showing the glass portion **18** surrounded by a coating **20** comprising at least an inner coating layer **20A** and an outer coating layer **20B.** The glass portion **18** will be discussed first, followed by coating **20.**

According to an exemplary embodiment, the optical fiber **12** is a glass optical fiber configured for high-speed data communication via the transmission of electromagnetic radiation (e.g., light). In some such embodiments, the optical fiber **12** is a germanium-doped silica glass fiber having the glass portion **18** that includes a glass core **64** and glass cladding **66.** The glass core **64** may include a diameter **D_{C}**, for example, in a range from eight (8) microns to 62.5 microns. The glass cladding **66** forms the exterior surface **58** of the glass portion **18** of the optical fiber **12,** and may comprise a diameter **D_{GP},** for example, of one-hundred twenty-five (125) microns.

With continued reference to **FIG. 4B****,** the inner coating layer **20A** may be a softer, more rubbery material than the outer coating layer **20B.** The inner coating layer **20A** may extend, for example, from the glass portion **18** to a diameter **D_{IC}** of one-hundred ninety (190) microns. In this manner, the inner coating layer **20A** provides cushioning to the glass portion **18** of the optical fiber **12** to protect against external mechanical loads. The inner coating layer **20A** may also thereby enable the coating **20** to be more easily removed from the glass portion **18** of the optical fiber **12.** The outer coating layer **20B** may comprise a different material composition than the inner coating layer **20A,** resulting in a stiffer material than the inner coating layer **20A** that protects the optical fiber **12** from abrasions and environmental exposure. The outer coating layer **20B** may extend, for example, from the inner coating layer **20A** to a diameter **Doc** of two-hundred fifty (250) microns. The inner coating layer **20A** and the outer coating layer **20B** may comprise a polymer material that includes acrylate, and may be at least twenty (20) microns thick or more to protect the exterior surface **58** of the glass portion **18** of the optical fiber **12.** When the optical fiber **12** approaches the rear opening **24** of the ferrule **14,** the coating **20** may be heated by the ferrule **14** to change the inner coating layer **20A** to a non-solid state and/or thermally expand a portion of the inner coating layer **20A** to push the outer coating layer **20B** away from the glass portion **18.** The outer coating layer **20B** is thereby disengaged from the glass portion **18.** In this manner, the coating **20** may facilitate efficient thermal removal.

Specifically, in one non-limiting embodiment, the inner coating layer **20A** may expand and/or boil to thereby fracture the outer coating layer **20B.** The outer coating layer **20B** may or may not be changed to a non-solid state by heat from the ferrule **14.** Then, as the glass portion **18** of the optical fiber **12** is pushed into the ferrule bore **22,** the coating **20** is pushed from (or shucked off) the optical fiber **12** with the at least one rear surface **28** of the ferrule **14** to remain outside the ferrule bore **22.** In this specific non-limiting embodiment, the coating **20** may be thermally removed from the optical fiber **12.**

With reference back to **FIG. 4A****,** the ferrule assembly **16** includes the glass portion **18** of the end portion **10** of the optical fiber **12** coupled to the inner surface **42** of the ferrule **14.** **FIG. 4C** is a cutaway view, parallel to the optical axis **A₁** of the ferrule assembly **16** of **FIG. 4A****,** showing the end portion **10** of the optical fiber **12** and with the coating **20** thermally removed, or substantially thermally removed, consistent with the process of **FIG. 2****.** The exterior surface **58** of the glass portion **18** of the optical fiber **12** may be in abutment with the inner surface **42** of the ferrule **14.** Additionally, the bonding agent **48** may secure the glass portion **18** of the optical fiber **12** to the inner surface **42** of the ferrule **14.** In this manner, the optical fiber **12** may be secured and precisely located within the ferrule **14.**

Other processes can be employed to prepare the ferrule assembly **16** for the fiber optic connector sub-assembly **60** for thermal removal of the coating **20** of the end portion **10** of the optical fiber **12** by inserting the coated end portion **10** of the optical fiber **12** into the ferrule bore **22** through the rear opening **24** of the ferrule **14,** which has been heated. In this regard, **FIG. 5A** is a flowchart diagram of another process **44(2)** of terminating the optical fiber **12** at the ferrule **14** to create the ferrule assembly **16** for the fiber optic connector sub-assembly **60.** The process **44(2)** is similar to the process **44(1)** discussed above, and only the differences will be explained for clarity and conciseness.

In this regard, the process **44(2)** comprises blocks **46A(2)-46D(2),** which may be similar to the blocks **46A(1)-46D(1)** of the process **44(1),** except the block **46B(2)** comprises induction heating the ferrule **14** with an electromagnet **66** disposed around the ferrule **14.** The electromagnet **66** may comprise at least one coil **68(1)-68(N)** disposed around the ferrule **14.** The electromagnet **66** may be coupled to an electrical current source **70** to provide alternating current to the electromagnet **66** and thereby inductively heat the ferrule **14.** Specifically, in one embodiment, the ferrule **14** may comprise zirconia, or other materials, that may be inductively heated and thereby eddy currents may be induced by the electromagnet **66.** Electrical resistance of the material to the eddy currents leads to inductive heating of the ferrule **14.** In this manner, the ferrule **14** may be heated above a temperature sufficient to change the coating **20** on the coated end portion **10** of the optical fiber **12** to a non-solid state.

Other processes can be employed to prepare the ferrule assembly **16** for the fiber optic connector sub-assembly **60** for thermal removal of the coating **20** of the end portion **10** of the optical fiber **12** by inserting the coated end portion **10** of the optical fiber **12** into the ferrule bore **22** through the rear opening **24** of the ferrule **14,** which has been heated. In this regard, **FIG. 6A** is a flowchart diagram of another process **44(3)** of terminating the optical fiber **12** at the ferrule **14** to create the ferrule assembly **16** for the fiber optic connector sub-assembly 60. The process **44(3)** is similar to the process **44(1)** discussed above, and only the differences will be explained for clarity and conciseness.

In this regard, the process **44(3)** comprises blocks **46A(3)-46D(3),** which may be similar to the blocks **46A(1)-46D(1)** of the process **44(1),** except the block **46B(3)** comprises heating the ferrule **14** by directing a laser beam **72** emitted from a laser **74** to be incident upon the ferrule **14.** The laser beam **72** may include a wavelength in a range from one-hundred fifty-seven (157) nanometers to 10.6 microns, and preferably at a wavelength of 9.3 microns for efficient absorption by the coating **20.**

At least some of the energy of the laser beam **72** incident upon the ferrule **14** will be absorbed by the ferrule **14.** In this manner, the ferrule **14** may be heated above a temperature sufficient to change the coating **20** on the coated end portion **10** of the optical fiber **12** to a non-solid state. The laser **74** may be, for example, a carbon dioxide laser emitting the laser beam **72** with a wavelength λ of 9.3 microns. In one embodiment, the laser **74** may be a Diamond™ C-20A laser manufactured by Coherent Incorporated of Santa Clara, California.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that any particular order be inferred.

It will be apparent to those skilled in the art that various modifications and variations can be made without departing from the spirit or scope of the invention. Since modifications combinations, sub-combinations and variations of the disclosed embodiments incorporating the substance of the invention may occur to persons skilled in the art, the invention should be construed to include everything within the scope of the appended claims.

## Claims

1. A method of terminating an optical fiber (12) at a ferrule (14) to create a ferrule assembly (16) for a fiber optic connector, comprising:
providing a ferrule (14) at an initial temperature, the ferrule (14) comprising a ferrule bore (22) extending from a rear opening (24) to a front opening (26);
heating the ferrule (14) above the initial temperature with a heater device (54, 56, 70, 74) ; and
inserting a coated end portion (10) of an optical fiber (12) through the rear opening (24) of the ferrule bore (22) while the ferrule (14) is heated above the initial temperature sufficient to thermally remove or substantially thermally remove a coating (20) from the coated end portion (10) of the optical fiber (12) as it passes through the rear opening (24) of the ferrule (14).

2. The method of claim 1, wherein the coated end portion (10) of the optical fiber (12) is inserted through the rear opening (24) of the ferrule bore (22) while the ferrule (14) is heated above the initial temperature sufficient to change the coating on the coated end portion(10) of the optical fiber (12) to a non-solid state for thermally removing or substantially thermally removing the coating (20).

3. The method of either claim 1 or 2, wherein the heating the ferrule (14) comprises heating the ferrule (14) above the initial temperature sufficient to thermally oxidize the coating (20).

4. The method of any of claims 1-3, wherein the heating the ferrule (14) comprises heating the ferrule (14) above 300 degrees Celsius.

5. The method of any of claims 1-4, wherein the heating the ferrule (14) comprises directing a laser beam (72) emitted from a laser (74) to be incident upon the ferrule (14).

6. The method of claim 5, wherein the heating the ferrule (14) comprises directing the laser beam (72) having a wavelength in a range from 157 nanometers to 10.6 microns.

7. The method of any of claims 1-4, wherein the heating the ferrule (14) comprises induction heating the ferrule (14) with an electromagnet (66) disposed around the ferrule (14).

8. The method of any of claims 1-4, wherein the heating the ferrule (14) above the initial temperature comprises heating the ferrule (14) with an electromagnet (66) disposed around at least a rear end (38) of the ferrule (14).

9. The method of any of claims 1-8, further comprising accumulating at least a portion of the coating (20) removed from the coated end portion (10) of the optical fiber (12) to form a supporting body for the optical fiber adjacent to the ferrule (14), wherein the accumulating comprises at least partially filling a cone-shaped space of the ferrule (14) adjacent to the rear opening (24) with the at least a portion of the coating (20) removed.

10. The method of any of claims 1-9, wherein the removing the coating (20) of the coated end portion (10) of the optical fiber (12) comprises removing the coating (20) so that at least 25 percent of an exterior surface of a glass portion (18) of the end portion of the optical fiber (12) disposed within the ferrule bore (22) is free of coating.

11. The method of any of claims 1-10, further comprising disposing a bonding agent (48) into the ferrule bore (22) prior to the inserting of the coated end portion (10) of the optical fiber (12).

12. The method of claim 11, wherein the disposing the bonding agent (48) into the ferrule bore (22) comprises injecting the bonding agent (48) into the ferrule bore (22) with a syringe (50).

13. The method of any of claims 1-12, wherein the thermally removing or substantially thermally removing the coating (20) comprises:
heating with the ferrule (14) an inner layer (20A) of the coating to thereby fracture an outer layer (20B) of the coating (20) by thermally expanding the inner coating layer (20A) or changing the inner coating layer (20A) to the non-solid state; and
pushing the coating (20) from the optical fiber (12) with a rear surface of the ferrule (14).

14. The method of any of claims 1-13, wherein the removing the coating (20) comprises removing an inner layer (20A) of coating and an outer layer (20B) of coating (20), and the inner layer (20A) and the outer layer (20B) comprise different material compositions.

## Patentansprüche

1. Verfahren zum Abschließen einer Lichtleiterfaser (12) an einer Ferrule (14), um eine Ferrulenanordnung (16) für einen faseroptischen Verbinder zu erzeugen, umfassend:
Bereitstellen einer Ferrule (14) mit einer anfänglichen Temperatur, wobei die Ferrule (14) eine Ferrulendurchgangsbohrung (22) umfasst, die sich von einer rückseitigen Öffnung (24) zu einer vorderseitigen Öffnung (26) erstreckt;
Erwärmen der Ferrule (14) mit einer Heizvorrichtung (54, 56, 70, 74) über die anfängliche Temperatur hinaus; und
Einfügen eines beschichteten Endabschnitts (10) der Lichtleiterfaser (12) durch die rückseitige Öffnung (24) der Ferrulendurchgangsbohrung (22) während die Ferrule (14) über die anfängliche Temperatur hinaus ausreichend erwärmt wird, um eine Beschichtung (20) von dem beschichteten Endabschnitt (10) der Lichtleiterfaser (12) thermisch zu entfernen oder im Wesentlichen thermisch zu entfernen, wenn er die rückseitige Öffnung (24) der Ferrule (14) durchquert.

2. Verfahren nach Anspruch 1, wobei der beschichtete Endabschnitt (10) der Lichtleiterfaser (12) durch die rückseitige Öffnung (24) der Ferrulendurchgangsbohrung (22) eingefügt wird, während die Ferrule (14) über die anfängliche Temperatur hinaus ausreichend erwärmt wird, um die Beschichtung an dem beschichteten Endabschnitt (10) der Lichtleiterfaser (12) in einen nichtfesten Zustand zu ändern, um die Beschichtung (20) thermisch zu entfernen oder im Wesentlichen thermisch zu entfernen.

3. Verfahren nach Anspruch 1 oder 2, wobei das Erwärmen der Ferrule (14) ein ausreichendes Erwärmen der Ferrule (14) über die anfängliche Temperatur hinaus umfasst, um die Beschichtung (20) thermisch zu oxidieren.

4. Verfahren nach einem der Ansprüche 1 bis 3, wobei das Erwärmen der Ferrule (14) ein Erwärmen der Ferrule (14) über 300 Grad Celsius umfasst.

5. Verfahren nach einem der Ansprüche 1 bis 4, wobei das Erwärmen der Ferrule (14) ein Ausrichten eines Laserstrahls (72) umfasst, der von einem Laser (74) abgestrahlt wird, um auf die Ferrule (14) aufzutreffen.

6. Verfahren nach Anspruch 5, wobei das Erwärmen der Ferrule (14) ein Ausrichten des Laserstrahls (72) umfasst, der eine Wellenlänge in einem Bereich von 157 nm bis 10,6 µm aufweist.

7. Verfahren nach einem der Ansprüche 1 bis 4, wobei das Erwärmen der Ferrule (14) ein Induktionserwärmen der Ferrule (14) mit einem Elektromagnet (66) umfasst, der um die Ferrule (14) angebracht ist.

8. Verfahren nach einem der Ansprüche 1 bis 4, wobei das Erwärmen der Ferrule (14) über die anfängliche Temperatur hinaus ein Erwärmen der Ferrule (14) mit einem Elektromagnet (66) umfasst, der mindestens um ein rückseitiges Ende (38) der Ferrule (14) angebracht ist.

9. Verfahren nach einem der Ansprüche 1 bis 8, das außerdem ein Auffangen mindestens eines Teils der Beschichtung (20) umfasst, die von dem beschichteten Endabschnitt (10) der Lichtleiterfaser (12) entfernt wird, um einen Stützkörper für die Lichtleiterfaser in der Nähe der Ferrule (14) zu bilden, wobei das Auffangen ein mindestens teilweises Füllen eines kegelförmigen Raums der Ferrule (14) in der Nähe der rückseitigen Öffnung (24) mit mindestens einem Teil der entfernten Beschichtung (20) umfasst.

10. Verfahren nach einem der Ansprüche 1 bis 9, wobei das Entfernen der Beschichtung (20) des beschichteten Endabschnitts (10) der Lichtleiterfaser (12) ein Entfernen der Beschichtung (20) umfasst, sodass mindestens 25 Prozent einer Außenfläche eines Glasabschnitts (18) des Endabschnitts der Lichtleiterfaser (12), die innerhalb der Ferrulendurchgangsbohrung (22) angebracht ist, frei von der Beschichtung ist.

11. Verfahren nach einem der Ansprüche 1 bis 10, das außerdem ein Anbringen eines Haftmittels (48) in der Ferrulendurchgangsbohrung (22) vor dem Einfügen des beschichteten Endabschnitts (10) der Lichtleiterfaser (12) umfasst.

12. Verfahren nach Anspruch 11, wobei das Anbringen des Haftmittels (48) in der Ferrulendurchgangsbohrung (22) ein Einspritzen des Haftmittels (48) mit einer Spritze (50) in die Ferrulendurchgangsbohrung (22) umfasst.

13. Verfahren nach einem der Ansprüche 1 bis 12, wobei das thermische Entfernen oder das im Wesentlichen thermische Entfernen der Beschichtung (20) umfasst:
Erwärmen mit der Ferrule (14) einer Innenschicht (20A) der Beschichtung, um dadurch eine Außenschicht (20B) der Beschichtung (20) zu zerbrechen, indem die Beschichtungsinnenschicht (20A) thermisch ausgedehnt wird oder die Beschichtungsinnenschicht (20A) in den nichtfesten Zustand verändert wird; und
Schieben der Beschichtung (20) mithilfe einer rückseitigen Fläche der Ferrule (14) von der Lichtleiterfaser (12).

14. Verfahren nach einem der Ansprüche 1 bis 13, wobei das Entfernen der Beschichtung (20) ein Entfernen einer Innenschicht (20A) der Beschichtung und einer Außenschicht (20B) der Beschichtung (20) umfasst, und wobei die Innenschicht (20A) und die Außenschicht (20B) unterschiedliche Materialzusammensetzungen umfassen.

## Revendications

1. Procédé de terminaison d'une fibre optique (12) au niveau d'une ferrule (14) pour la création d'un ensemble ferrule (16) pour un connecteur de fibres optiques, comprenant les étapes suivantes :
se procurer une ferrule (14) à une température initiale, la ferrule (14) comprenant un alésage de ferrule (22) s'étendant depuis une ouverture arrière (24) jusqu'à une ouverture avant (26) ;
chauffer la ferrule (14) au-dessus de la température initiale avec un dispositif de chauffage (54, 56, 70, 74) ; et
insérer une partie d'extrémité revêtue (10) d'une fibre optique (12) à travers l'ouverture arrière (24) de l'alésage de ferrule (22) pendant que la ferrule (14) est chauffée au-dessus de la température initiale suffisamment pour retirer thermiquement ou retirer thermiquement en grande partie un revêtement (20) de la partie d'extrémité revêtue (10) de la fibre optique (12) lorsqu'elle passe à travers l'ouverture arrière (24) de la ferrule (14).

2. Procédé de la revendication 1, dans lequel la partie d'extrémité revêtue (10) de la fibre optique (12) est insérée à travers l'ouverture arrière (24) de l'alésage de ferrule (22) pendant que la ferrule (14) est chauffée au-dessus de la température initiale suffisamment pour faire passer le revêtement sur la partie d'extrémité revêtue (10) de la fibre optique (12) dans un état non solide pour retirer thermiquement ou retirer thermiquement en grande partie le revêtement (20).

3. Procédé de la revendication 1 ou 2, dans lequel le chauffage de la ferrule (14) comprend le chauffage de la ferrule (14) au-dessus de la température initiale suffisamment pour oxyder thermiquement le revêtement (20).

4. Procédé de l'une quelconque des revendications 1 à 3, dans lequel le chauffage de la ferrule (14) comprend le chauffage de la ferrule (14) au-dessus de 300 degrés Celsius.

5. Procédé de l'une quelconque des revendications 1 à 4, dans lequel le chauffage de la ferrule (14) comprend l'orientation d'un faisceau laser (72) émis depuis un laser (74) pour qu'il soit incident sur la ferrule (14).

6. Procédé de la revendication 5, dans lequel le chauffage de la ferrule (14) comprend l'orientation du faisceau laser (72) ayant une longueur d'onde dans une gamme de 157 nanomètres à 10,6 micromètres.

7. Procédé de l'une quelconque des revendications 1 à 4, dans lequel le chauffage de la ferrule (14) comprend le chauffage par induction de la ferrule (14) avec un électroaimant (66) disposé autour de la ferrule (14).

8. Procédé de l'une quelconque des revendications 1 à 4, dans lequel le chauffage de la ferrule (14) au-dessus de la température initiale comprend le chauffage de la ferrule (14) avec un électroaimant (66) disposé autour d'au moins une extrémité arrière (38) de la ferrule (14).

9. Procédé de l'une quelconque des revendications 1 à 8, comprenant en outre l'accumulation d'au moins une partie du revêtement (20) retiré de la partie d'extrémité revêtue (10) de la fibre optique (12) pour la formation d'un corps de support pour la fibre optique au voisinage de la ferrule (14), l'accumulation comprenant le remplissage au moins partiel d'un espace en forme de cône de la ferrule (14) au voisinage de l'ouverture arrière (24) avec l'au moins une partie du revêtement (20) retirée.

10. Procédé de l'une quelconque des revendications 1 à 9, dans lequel le retrait du revêtement (20) de la partie d'extrémité revêtue (10) de la fibre optique (12) comprend le retrait du revêtement (20) de telle sorte qu'au moins 25 pour cent d'une surface extérieure d'une partie en verre (18) de la partie d'extrémité de la fibre optique (12) disposée à l'intérieur de l'alésage de ferrule (22) soit exempte de revêtement.

11. Procédé de l'une quelconque des revendications 1 à 10, comprenant en outre la mise en place d'un liant (48) dans l'alésage de ferrule (22) avant l'insertion de la partie d'extrémité revêtue (10) de la fibre optique (12).

12. Procédé de la revendication 11, dans lequel la mise en place du liant (48) dans l'alésage de ferrule (22) comprend l'injection du liant (48) dans l'alésage de ferrule (22) avec une seringue (50).

13. Procédé de l'une quelconque des revendications 1 à 12, dans lequel le retrait thermique ou retrait thermique d'une grande partie du revêtement (20) comprend les étapes suivantes :
chauffer avec la ferrule (14) une couche interne (20A) du revêtement pour fracturer ainsi une couche externe (20B) du revêtement (20) par dilatation thermique de la couche de revêtement interne (20A) ou passage de la couche de revêtement interne (20A) à l'état non solide ; et
pousser le revêtement (20) depuis la fibre optique (12) avec une surface arrière de la ferrule (14).

14. Procédé de l'une quelconque des revendications 1 à 13, dans lequel le retrait du revêtement (20) comprend le retrait d'une couche interne (20A) de revêtement et d'une couche externe (20B) de revêtement (20), et la couche interne (20A) et la couche externe (20B) comprennent des compositions de matière différentes.
